(19) Europäisches Patentamt / European Patent Office / Office européen des brevets

(11) **EP 3 223 049 B1**

(12) **EUROPEAN PATENT SPECIFICATION**

(45) Date of publication and mention
of the grant of the patent:
**24.01.2024 Bulletin 2024/04**

(21) Application number: **16161719.6**

(22) Date of filing: **22.03.2016**

(51) International Patent Classification (IPC):
**G02B 6/293** (2006.01)    **G02B 6/28** (2006.01)
**G02B 6/12** (2006.01)

(52) Cooperative Patent Classification (CPC):
**G02B 6/29355; G02B 6/12007**

(54) **POINT-SYMMETRIC MACH-ZEHNDER-INTERFEROMETER DEVICE**

PUNKTSYMMETRISCHE MACH-ZEHNDER-INTERFEROMETER VORRICHTUNG

DISPOSITIF D'INTERFÉROMÈTRE MACH-ZEHNDER À SYMÉTRIE PONCTUELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.09.2017 Bulletin 2017/39**

(73) Proprietor: **Huawei Technologies Co., Ltd.
Longgang District
Shenzhen, Guangdong 518129 (CN)**

(72) Inventors:
• **HU, Youfang
80992 Munich (DE)**
• **DHARANIPATHY, Ulagalandha Perumal
80992 Munich (DE)**

(74) Representative: **Roth, Sebastian
Mitscherlich PartmbB
Patent- und Rechtsanwälte
Karlstraße 7
80333 München (DE)**

(56) References cited:
EP-A2- 0 989 423      US-A- 5 165 001
US-A1- 2011 097 035

• JARED F BAUTERS ET AL: "Ultra-low-loss
high-aspect-ratio Si3N4 waveguides", OPTICS
EXPRESS, vol. 19, no. 4, 3 February 2011
(2011-02-03), pages 3163-3174, XP055288320,
ISSN: 2161-2072, DOI: 10.1364/OE.19.003163
• HIDA ET AL.: JOURNAL OF LIGHTWAVE
TECHNOLOGY, vol. 14, no. 10, 1996, pages
2301-2310, XP002759868,
• ELECTRONICS AND COMMUNICATIONS IN
JAPAN, vol. 81, no. 4, 1998, pages 19-28,
XP002759869,
• TAKAGI ET AL.: JOURNAL OFLIGHTWAVE
TECHNOLOGY, vol. 10, no. 12, 1992, pages
1814-1824, XP002759870,

**Description**

TECHNICAL FIELD

The present invention relates to a Point-Symmetric Mach-Zehnder-Interferometer (PSMZI) device, to a wavelength duplexer device including the PSMZI device, and to a fabrication method of the PSMZI device.

BACKGROUND

Silicon photonics is rapidly gaining importance as a generic technology platform for a wide range of applications in telecom, datacom, interconnect, and sensing. Silicon photonics allows implementing photonic functions through the use of CMOS compatible wafer-scale technologies on high quality, low cost silicon substrates. However, pure passive silicon waveguide devices still have limited performance in terms of insertion loss, phase noise (which results in channel cross-talk) and temperature dependency. This is due to the high refractive index contrast between the SiOz (silicon dioxide) cladding and the Si (silicon) core, the non-uniform Si layer thickness, and the large thermo-optical effect of silicon.

$SiN_x$ (silicon nitride) based passive devices offer superior performance. Propagation losses below 0.1 dB/cm have been demonstrated for waveguides with a 640 nm thick SiNx core, and even below 0.1 dB/m for waveguides with a 50 nm thick core. Also, the slightly lower refractive index contrast between $SiN_x$ (n=2) and $SiO_2$ (n=1.45) versus Si (n=3.5) and $SiO_2$ (n=1.45) results in less phase noise and larger fabrication tolerances. This makes the fabrication of high performance, but still very compact optical circuits, such as AWGs or ring resonators, possible. $SiN_x$ waveguides have been reported both as a high performance passive waveguide layer on an active silicon photonics chip, and also as 'stand-alone' passive optical chips.

In Fiber-To-The-X (FTTX) devices/equipment, e.g. OLT, ONU, it is known to use a wavelength duplexer for separating upstream and downstream wavelength bands from a single input optical fiber. ITU standards require wavelength duplexing with low insertion loss and low cross-talk over broad wavelength bands, in order to be realized at low cost. The use of a (silicon) photonic integrated circuit (PIC) in FTTX devices/equipment has the advantages of low cost, small size and high reliability.

For realizing, for instance, a PIC duplexer, it is known to employ Multimode Interferometers (MMIs), Mach-Zehnder-Interferometers (MZIs), rings etc. based on silicon photonics. For all these structures, however, it is still challenging to achieve the ITU-specified performance along with a high yield in mass production. Also Multi-stage cascaded MZI have been used in a broadband duplexer. The flatness of the filter's pass-band and isolation between channels increases, when the number of cascading stages increases. However, at the same time the complications of the photonic circuits and the sensitivity to fabrication errors also increases with the number of stages.

Hida et al. ('Journal of Lightwave Technology, Vol. 14, No. 10, pp. 2301-2310, 1996' and 'Electronics and Communications in Japan, Part 2, Vol. 81, No. 4, pp. 19-28, 1998') proposed silica-based PSMZIs for a broadband flat-top wavelength (de)multiplexer. The design is based on a zero-arm-difference MZI with two coupler sections formed by two identical coupler MZIs. The coupler MZIs are realized by symmetric (directional) couplers (SCs). In such SCs the spectral response of a coupling coefficient $K(\lambda)$ varies periodically between 0 and 1. The coupling coefficient $K(\lambda)$, and its sensitivity to structural parameter variations, temperature changes etc., can be shaped by designing structural parameters of the SC. For instance, a gap distance, coupler waveguide width, coupler waveguide length, bending waveguide width, taper length, waveguide thickness, or waveguide etching thickness can be selected.

Takagi et al. ('Journal of Lightwave Technology, Vol. 10, No. 12, pp. 1814-1824, 1992') proposed three types of silica-based asymmetric (directional) couplers (ACs) with series-tapered coupling structures, namely, line-symmetric series-tapered (LSST), point-symmetric series tapered (PSST), and non-symmetric series-tapered (NSST), respectively. These ACs were only designed for wavelength-insensitive coupling (WINC).

So far, ACs are not known for use in PSMZIs. This is due to the fact that still low refractive index contrast platforms dominate the fabrication of PICs, in which the use of ACs increases the fabrication cost of a PSMZI device substantially compared with SCs.

US 2011097035A1 describes a broadband wavelength multiplexing and demultiplexing filter comprising a Mach-Zehnder optical interferometer having directional couplers.

US 5165001 A discloses a guided-wave optical branching device having optical waveguides disposed on a substrate. The waveguides are partially arranged to be close to each other to form a tapered directional coupler in which the waveguides are point symmetrical or line symmetrical.

SUMMARY

The present invention aims to further improve conventional PSMZIs. In particular, the present invention has the object to provide a PSMZI device with improved performance and less sensitivity to fabrication errors. To this end, the present invention aims for a PSMZI device, which provides more design flexibility. Additionally, a substantial reduction of production costs of a PSMZI device, and also of FTTX modules, e.g. of OLT and ONU, is to be achieved.

The object of the present invention is achieved by the solution provided in the enclosed independent claims. Advantageous implementations of the present invention are further defined in the dependent claims. Essentially, the present invention proposes the use of ACs in a PSMZI device. In the following, parts of the description and drawings referring to embodiments not covered by the claims, are not part of the invention, but are illustrative examples necessary for understanding the invention.

A first aspect of the present invention provides a PSMZI device, comprising three consecutive path delay sections (PDSs), provided as two outer PDS and one center PDS, each PDS including an upper waveguide arm and a lower waveguide arm, four ACs, each AC including an upper waveguide portion and a lower waveguide portion, wherein one AC is arranged directly on each side of each PDS, the upper and lower waveguide portions being respectively coupled to the upper and lower waveguide arms, wherein the AC on the one side of the PDS is point-symmetric to the AC on the other side of the PDS, and wherein the two ACs and the one outer PDS arranged on the one side of the center PDS are together point-symmetric to the two couplers and the one outer PDS arranged on the other side of the center PDS.

In a typical AC, the ratio of an effective coupling length to a total length is smaller than 1, in contrast with a SC, in which this ratio equals to 1. An AC is further characterized by the fact that the phase difference between its cross- and through-output is potentially not 90°. By providing the point-symmetric arrangement of the ACs in the PSMZI device of the first aspect, the shape and geometry of the asymmetries is reversed on either side of each PDS, and on either side of the central PDS. Accordingly, any phase deviation coming from a single AC is compensated. As a consequence, the PSMZI device of the first aspect benefits fully from the larger design flexibility that an AC brings, without any drawbacks.

In particular, by the use of the ACs in the PSMZI device of the first aspect, more design flexibility is introduced, because there are extra design parameters (e.g. a coupling waveguide width difference) in addition to the design parameters also provided by SCs. The extra design parameters of the ACs can be used for shaping the spectral response of the couplers within the PSMZI device. With the additional degree of freedom in designing the couplers, a better overall performance can be achieved. Specifically, a spectral response of each AC can be shaped to be closer to the optimal design than a spectral response of a comparable SC. This is particularly true for couplers designed for a broadband, flat-top, low-cross-talk duplexer.

In the PSMZI device of the first aspect, because any pair of ACs on either side of each PDS is point symmetric, dimensional errors occurring during the fabrication process of the PSMZI device will likewise occur in all ACs. This is due to the fact that all AC structures are located relatively close to each other during the fabrication process. Thus, any dimensional errors will compensate each other.

In an embodiment, the center PDS provides a path difference of zero.

Accordingly, a completely point-symmetric structure can be designed for the PSMZI device.

In an embodiment, a path difference provided by one outer PDS is the same, but is provided in the other waveguide arm, than a path difference provided by the other outer PDS.

In an embodiment, total path length of all upper waveguide arms is the same as a total path length of all lower waveguide arms.

Accordingly, the complete structure of the PSMZI device becomes fully point-symmetric.

In an embodiment, the four ACs and the two outer PDS are designed such that a phase difference, which is caused by the two ACs and one outer PDS arranged on the one side of the center PDS, is compensated by a phase difference, which is caused by the two ACs and one outer PDS arranged on the other side of the center PDS.

As a consequence, the increased design flexibility provided by the ACs can be fully exploited in the design of the PSMZI device without any negative impacts on its performance.

In an embodiment, the four ACs are of the line-symmetric series-tapered (LSST) type.

The preferred LSST type used in the PSMZI device of the first aspect yields the best coupling results, and thus the largest performance improvements.

In an embodiment, the waveguide arms are made of a material having a refractive index in a range of 1.4 - 4.5.

In an embodiment, the waveguide arms are made of SiN, and are more particularly embedded into a cladding made of $SiO_2$.

Accordingly, a high refractive index contrast platform is preferred. This is due to the fact that in low refractive index contrast platforms, (directional) couplers are always weakly coupled (since a waveguide gap is a few $\mu$m), and thus the whole structure needs to be very long (at least a few mm), in order to achieve the desired coupling characteristics. However, in high refractive index contrast platforms, more particularly with SOI or SiN-on-Silica, the (directional) couplers can be designed to be more strongly coupled (with a waveguide gap being 200 - 400 nm), so that the total length of the structure can be reduced to below 100 $\mu$m. This saves a lot of mask area and silicon real-estate cost in fabrication.

Each AC can specifically be designed to have a dedicated, more particularly a curved (i.e. not flat-band), coupling coefficient. This may particularly be achieved by changing the coupling waveguide width in the order of tens of nm. Such a fine adjustment is, however, not realistic to achieve in a fabrication process with coarse lithographic accuracy (e.g. a 500 nm lithography accuracy is used for fabricating MEMS). However, as the fabrication technology of high refractive index contrast platforms (e.g. CMOS having a lithography accuracy of below 100nm) improves for PIC fabrication, the use of ACs becomes more and more practical.

In an embodiment, the PSMZI device further comprises an even number of additional PDS provided on either side of and point-symmetrically to the center PDS, each additional PDS including an upper waveguide arm and a lower waveguide arm, and an even number of additional ACs or symmetric couplers (SCs) each additional AC or SC including an upper waveguide portion and a lower waveguide portion, wherein one AC or SC is arranged directly on each side of each additional PDS, the upper and lower waveguide portions being respectively coupled to the upper and lower waveguide arms, and wherein the AC or SC on the one side of the additional PDS is point-symmetric to the AC or SC on the other side of the additional PDS.

Accordingly, a multi-stage PSMZI device in line with the invention can be fabricated. As mentioned above, the flatness of the filter's pass-band and an isolation between channels increases, when the number of cascading stages increases. The previously negative consequence of an increased sensitivity to fabrication errors with an increasing number of stages, is compensated - at least to some extent - by the use and advantages of the ACs.

In an embodiment, a width of each waveguide arm in each AC is between 1 - 3 $\mu$m, more particularly between 1.5 - 2 $\mu$m.

In an embodiment, a width variation of each waveguide arm in each AC is between 10 - 1000 nm, more particularly between 20 - 200 nm.

In an embodiment, a distance between the waveguide arms in each AC is between 0.25 - 0.5 $\mu$m, more particularly between 0.3 - 0.4 $\mu$m.

The above-mentioned parameters are all optimized for an improved performance of the PSMZI device on the one hand side, and for a reduced sensitivity to fabrication errors on the other hand side.

In an embodiment, the PSMZI device includes two coupler Mach Zehnder Interferometers (MZIs) arranged in a point symmetric way, and coupling coefficients $C(\lambda)$ of each coupler MZI satisfy C = 0.5 at a peak transmission wavelength of a cross-port of the coupler MZI, C = 0 or C = 1 at a peak transmission wavelength of a through-port of the coupler MZI, and dC/d$\lambda$ = 0 at the peak transmission wavelength of the cross-port.

By selecting the coupling coefficients in the above manner, a spectral response that is optimized for broadband, flat-top, and low-cross-talk is achieved.

A second aspect of the present invention provides a wavelength duplexer device comprising at least one PSMZI device according to the first aspect, wherein the wavelength duplexer device is more particularly configured for use in a passive optical network (PON) related application.

By using the PSMZI device of the first aspect, a wavelength duplexer with both low insertion loss and low TX to RX cross-talk at the TX wavelength band is obtained.

A third aspect of the present invention provides a method of fabricating a PSMZI device, comprising the steps of: providing three consecutive PDSs as two outer PDS and one center PDS, each PDS including an upper waveguide arm and a lower waveguide arm, providing four ACs, each

AC including an upper waveguide portion and a lower waveguide portion, wherein one AC is arranged directly on each side of each PDS, the upper and lower waveguide portions being respectively coupled to the upper and lower waveguide arms, wherein the AC on the one side of the PDS is point-symmetric to the AC on the other side of the PDS, and wherein the two ACs and the one outer PDS arranged on the one side of the center PDS are together point-symmetric to the two couplers and the one outer PDS arranged on the other side of the center PDS.

In an embodiment, the center PDS provides a path difference of zero.

In an embodiment, a path difference provided by one outer PDS is the same, but is provided in the other waveguide arm, than a path difference provided by the other outer PDS.

In an embodiment, a total path length of all upper waveguide arms is the same as a total path length of all lower waveguide arms.

In an embodiment, the four ACs and the two outer PDS are designed such that a phase difference, which is caused by the two ACs and one outer PDS arranged on the one side of the center PDS, is compensated by a phase difference, which is caused by the two ACs and one outer PDS arranged on the other side of the center PDS.

In an embodiment, the four ACs are of the LSST type.

In an embodiment, the waveguide arms are made of a material having a refractive index in a range of 1.4 - 4.5.

In an embodiment, the waveguide arms are made of SiN, and are more particularly embedded into a cladding made of SiO$_2$.

In an embodiment, the PSMZI device further comprises an even number of additional PDS provided on either side of and point-symmetrically to the center PDS, each additional PDS including an upper waveguide arm and a lower waveguide arm, and an even number of additional ACs or SCs, each additional AC or SC including an upper waveguide portion and a lower waveguide portion, wherein one AC or SC is arranged directly on each side of each additional PDS, the upper and lower waveguide portions being respectively coupled to the upper and lower waveguide arms, and wherein the AC or SC on the one side of the additional PDS is point-symmetric to the AC or SC on the other side of the additional PDS.

In an embodiment, a width of each waveguide arm in each AC is between 1 - 3 $\mu$m, more particularly between 1.5 - 2 $\mu$m.

In an embodiment, a width variation of each waveguide arm in each AC is between 10 - 1000 nm, more particularly between 20 - 200 nm.

In an embodiment, a distance between the waveguide arms in each AC is between 0.25 - 0.5 $\mu$m, more particularly between 0.3 - 0.4 $\mu$m.

In an embodiment, the PSMZI device includes two coupler MZIs arranged in a point symmetric way, and coupling coefficients C($\lambda$) of each coupler MZI satisfy C = 0.5 at a peak transmission wavelength of a cross-port of the coupler MZI, C = 0 or C = 1 at a peak transmission wavelength of a through-port of the coupler MZI, and dC/d$\lambda$, = 0 at the peak transmission wavelength of the cross-port.

With the fabrication method according to the third aspect, a PSMZI device with all advantages over a conventional PSMZI device mentioned-above regarding the first aspect is achieved.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF THE DRAWINGS

The above described aspects and implementation forms of the present invention will be explained in the following description of specific embodiments in relation to the enclosed drawings, in which:

Fig. 1    shows a PSMZI device according to an embodiment of the claimed invention.

Fig. 2    shows a PSMZI device according to an embodiment of the claimed invention.

Fig. 3    shows a PSMZI device according to an embodiment of the claimed invention.

Fig. 4    shows coupling in a coupler MZI device according to an embodiment of the claimedinvention.

Fig. 5    shows an AC of the LSST type, as used in a PSMZI device according to an embodiment of the claimed invention.

Fig. 6    shows simulation results for a PSMZI device according to an embodiment of the claimed invention.

Fig. 7    shows simulation results for a PSMZI device according to an embodiment of the claimed invention.

Fig. 8    shows simulation results for a PSMZI device according to an embodiment of the claimed invention.

Fig. 9    shows simulation results for a PSMZI device according to an embodiment of the claimed invention.

Fig. 10   shows a flow-diagram of a fabrication method according to an embodiment of the claimed invention.

DETAILED DESCRIPTION OF THE EMBODIMENTS

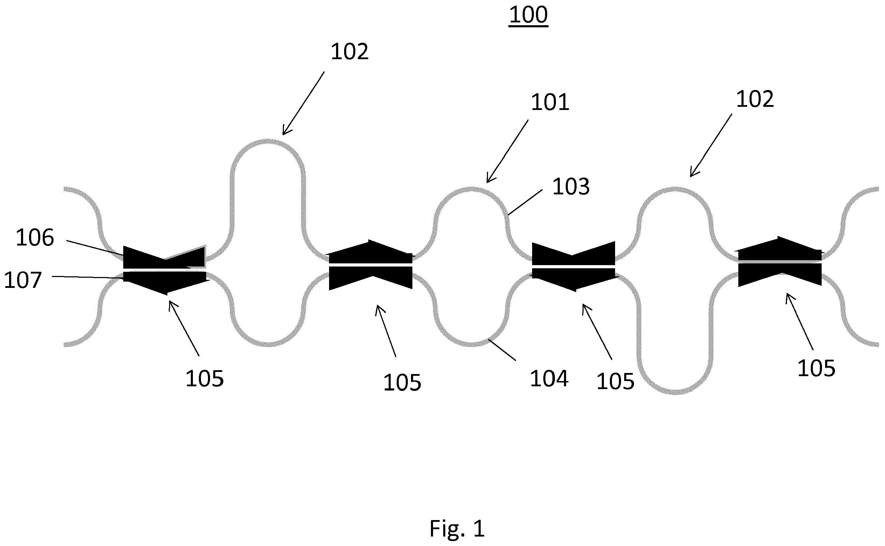

Fig. 1 illustrates schematically a PSMZI device 100 according to an embodiment of the present invention. As can be seen, the PSMZI device 100 comprises at least three consecutive PDSs 101, 102. In particular, the three PDSs 101, 102 are provided - in an extension direction of the PSMZI device 100 (i.e. from left to right in Fig. 1) - as a first outer PDS 102, a center PDS 101, and a second outer PDS 102 located on the other side of the center PDS 101 than the first outer PDS 102. Each PDS 101, 102 includes an upper waveguide arm 103 and a lower waveguide arm 104. The waveguide arms 103, 104 are more particularly made of a material having a refractive index in a range of 1.4 - 4.5. Advantageously, the waveguide arms 103, 104 may be made in a high refractive index contrast platform, more particularly are made of $SiN_x$, and are optionally embedded into a cladding made of $SiO_2$.

The PSMZI device 100 further comprises at least four ACs 105 (schematically illustrated in Fig. 1), provided alternatingly with the PDSs 101, 102. In particular, one AC 105 is arranged directly on each side of each PDS 101, 102. That means - in the extension direction of the PSMZI device 100 (i.e. from left to right in Fig. 1) - at least a first AC 105, the first outer PDS 102, a second AC 105, the center PDS 103, a third AC 104, the second outer PDS 102, and a fourth AC 105 are consecutively arranged.

Each AC 105 includes an upper waveguide portion 106 and a lower waveguide portion 107 (only schematically illustrated in Fig. 1), and the upper and lower waveguide portions 106, 107 of an AC 105 are respectively coupled to the upper and lower waveguide arms 103, 104 of each neighboring PDS 101, 102. The four ACs 105 may advantageously be all of the LSST type.

In the PSMZI device 100, the AC 105 on the one side of each PDS 101, 102 is point-symmetric to the AC 105 on the other side of the PDS 101, 102. That means particularly, that the shape and asymmetry of the two ACs 105 around each PDS 101, 102 are inverted with respect to each other. Furthermore, the two ACs 105 and the first outer PDS 101 arranged on the one side of the center PDS 102 are together point-symmetric to the two ACs 105 and the second outer PDS 101 arranged on the other side of the center PDS 102. That means, for instance, that a path difference provided by the first outer PDS 102 is the same, but is provided in a different waveguide arm 103 than a path difference provided by the second outer PDS 102 (which is provided in the other waveguide arm 104).

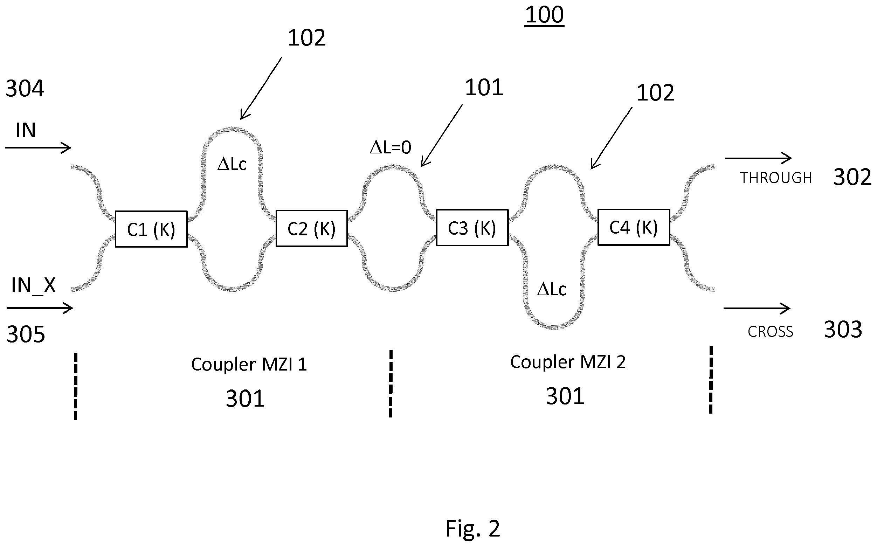

Fig. 2 shows a more detailed embodiment of the PSMZI device 100 of Fig 1. It can be seen that the PSMZI device 100 includes at least one IN port 304, IN_X port 305, THROUGH port 302 and CROSS port 303. Further, the PSMZI device 100 includes two coupler MZIs 301, which arranged in a point-symmetric way in respect to the central PDS 102. The first coupler MZI 301 includes the first outer PDS 102 and two of the ACs 105. The second coupler MZI 301 includes the second outer PDS 102 and the other two of the ACSs 105.

The structure of the PSMZI device 100 may be advantageously globally point-symmetric with the following characteristics:

- The path length from the IN port 304 to the THROUGH port 302 may optionally be the same as the total path length from the IN_X port 305 to the CROSS port 303.
- The path length difference $\Delta L$ in the center PDS 101 section is zero ($\Delta L=0$). That is, the center PDS 101 provides a path difference $\Delta L$ of zero.
- Optionally, a path difference $\Delta Lc$ provided by the first outer PDS 102 is the same, but is provided in the other waveguide arm 103, 104, than a path difference provided by the second outer PDS 101.
- A total path length of all upper waveguide arms 103 may optionally be the same as a total path length of all lower waveguide arms 104.
- Advantageously there may be the same number of couplers on either side of the center PDS 101. In other words, the total structure may optionally have an even number, and specifically at least four, ACs 105.

Accordingly, also the coupler MZIs 301 on either side of the center PDS 102 are arranged in a point-symmetric layout.

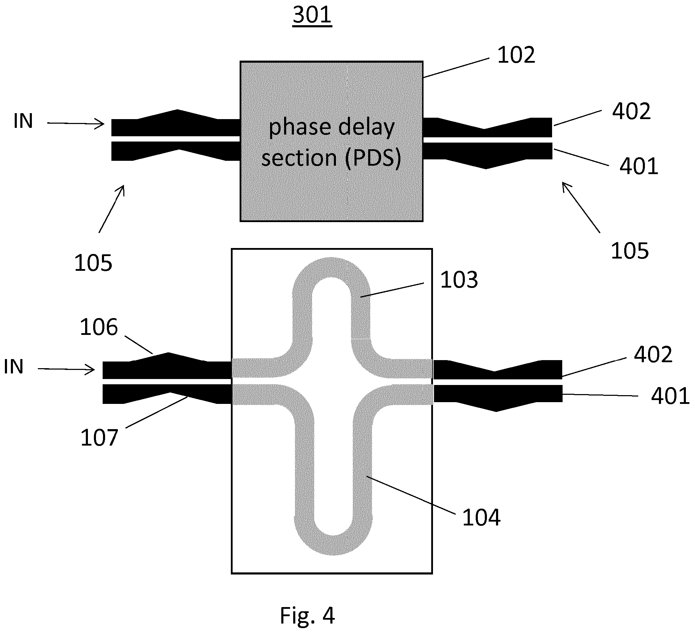

Furthermore, the single MZIs 301 on either side of the central PDS 101 can be replaced with multiple-stage cascaded MZIs 301 (not shown). That means, the PSMZI device 100 may further comprise an even number of additional PDS on either side of and point-symmetrically to the center PDS 101, and an even number of additional ACs or SCs arranged directly on each side of each additional PDS. Thereby, the AC or SC on the one side of each additional PDS is point-symmetric to the AC or SC on the other side of the additional PDS. Further, as shown in Fig. 4, each additional AC or SC includes - as each AC 105 of Fig. 2 - an upper waveguide portion and a lower waveguide portion, and each additional PDS includes - as each PDS 101, 102 of Fig. 2 - an upper waveguide arm and a lower waveguide arm. The upper and lower waveguide portions of the (directional) couplers are respectively coupled to the upper and lower waveguide arms of the PDS.

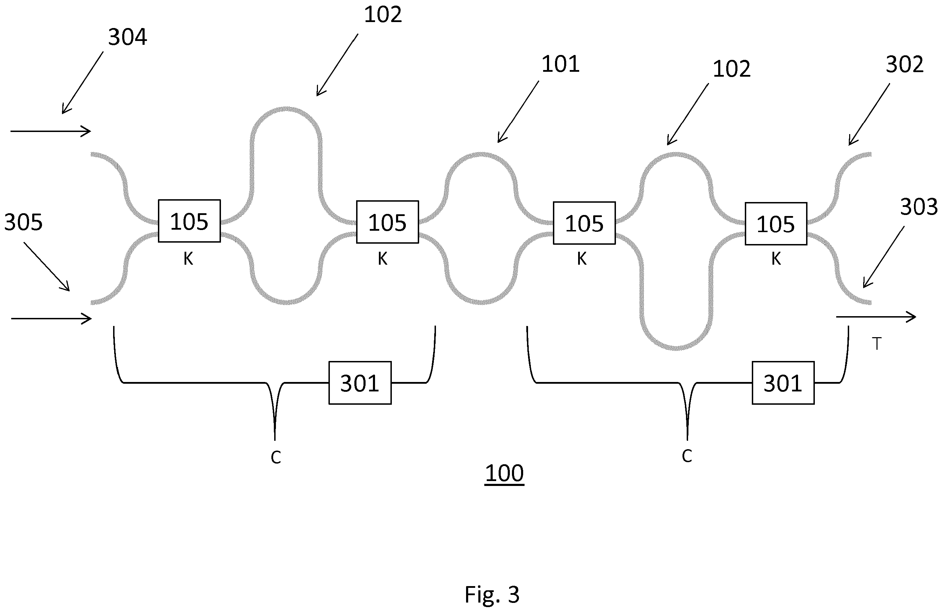

As shown in Figs. 2 and 3, the individual ACs 105 (labelled as C1 - C4 in Fig. 3) have a coupling coefficient $K(\lambda)$, and are arranged in a fully point-symmetric way. The ACs 105 may advantageously be designed to have a coupling coefficient $K(\lambda)$ that comes as close as possible to the optimal design (i.e. the optimal coupling coefficient). Thereby, the improved designing is supported by the additional design flexibility granted by the ACs 105.

Fig. 4 shows in the upper part schematically a coupler MZI 301 with a CROSS port 401 and a THROUGH port 402. In particular, Fig. 4 shows, how the shape and geometry of the ACs 105 are reversed on either side of a PDS 101, 102 in the coupler MZI 301. Due to this reversal, a phase deviation caused by each single AC 105 is compensated by another AC 105. Therefore, in summary no phase deviation is introduced, while it is possible to benefit fully from the design flexibility that the ACs 105 provide.

Fig. 4 shows, how the coupling between ACs 105 and PDS 101, 102, respectively (which is only shown schematically in Fig. 1), is implemented in detail. In particular, coupling between two ACs 105 and one of the outer PDS 101 is shown in Fig. 4. It can be seen that the upper waveguide portions 106 of the ACs 105 are connected to opposite sides of the upper waveguide arm 103 of the PDS 101. Likewise, the lower waveguide portions 107 of the ACs 105 are connected to opposite sides of the lower waveguide arm 104 of the PDS 101. The coupling is implemented identically for all the ACs 105 and PDSs 101, 102, respectively, of the PSMZI device 100 that is shown in Fig. 1.

Optionally, as also shown in Fig. 4, each coupler MZI 301 has the same coupling coefficient $C(\lambda)$ at the CROSS port 401, which is given by:

$$C=4K(1-K)cos^2(\pi n_{eff}\Delta Lc/\lambda)$$

Further, the whole PSMZI device 100 has a coupling coefficient $T(\lambda)$ at the CROSS port 303, which is given by:

$$T=4C(1-C)$$

For an optimal design, particularly for a broadband, flat-top, low-cross-talk spectral response of $T(\lambda)$, the coupling coefficient $C(\lambda)$ of each coupler MZI 301 may advantageously satisfy $C = 0.5$ at a peak transmission wavelength of the CROSS port 401, $C = 0$ or $C = 1$ at a peak transmission wavelength of a THROUGH port 402, and $dC/d\lambda = 0$ at the peak transmission wavelength of the CROSS port 401.

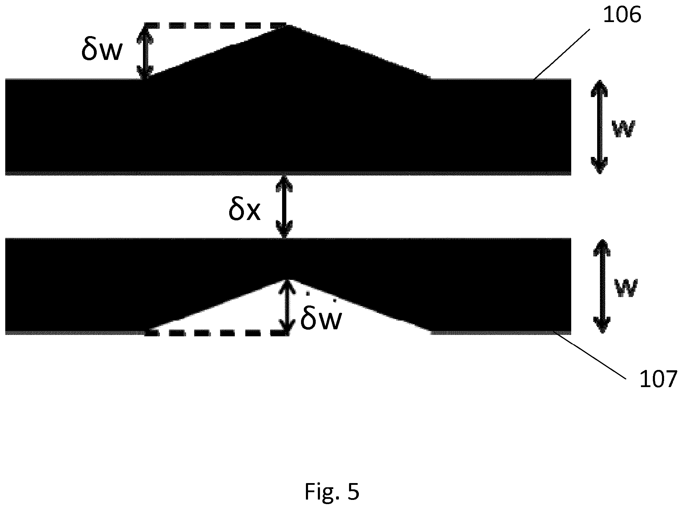

In order to fully exploit the increased design flexibility, which the use of ACs 105 in the PSMZI device 100 provides, the structural parameters 'coupler waveguide width ($w$)', 'waveguide width difference ($\delta w$)', and 'gap width ($\delta x$)' are advantageously selected. An AC 105 of the LSST type is shown as an example in Fig. 5, and the above-mentioned parameters $w$, $\delta w$ and $\delta x$ are indicated. That is, $w$ is the basic width of the waveguide portions 106 and 107 (without taking into account asymmetries). Further, $\delta x$ is the distance between the waveguide portions 106 and 107. Finally, $\delta w$ is the difference caused by the asymmetries in comparison with the basic width $w$ in each waveguide portion 106, 107. These three parameters can particularly be optimized to achieve a coupling coefficient $K(\lambda)$ of the AC 105 that is as close as possible to the optimal coupling coefficient $K$.

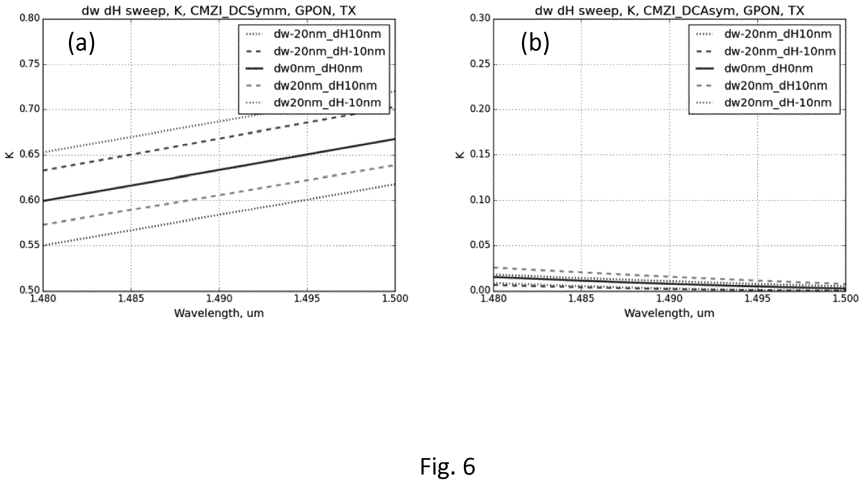

Fig. 6 shows the simulated coupling coefficient $K$ over the TX wavelength band of (a) a single DC, and (b) a single AC 105 used in a PSMZI device 100 for a GPON duplexer application.

Fig. 6 also shows the fabrication tolerances of the PMSZI device 100 regarding waveguide width (dw) and height (dH). The solid curves correspond to the target design. The dotted lines correspond to a SC with a waveguide width error of dw = -20nm and a waveguide height error of dH = 10nm, and respectively with dw = 20nm and dH = -10nm. The dashed lines correspond to dw = -20nm and dH = -10nm, and respectively to dw = 20nm and dH = 10nm.

Ideally, $K$ should be equal to 0 or 1 at a wavelength of 1.49 $\mu$m (i.e. the GPON TX band central wavelength). The comparison between the Figs. 6 (a) and (b) demonstrates that the ACs 105 can be designed to have a coupling coefficient K with a value much closer to the ideal design compared to the SC, with at the same time a lower sensitivity to the waveguide dimension errors (dw, dH) at TX band.

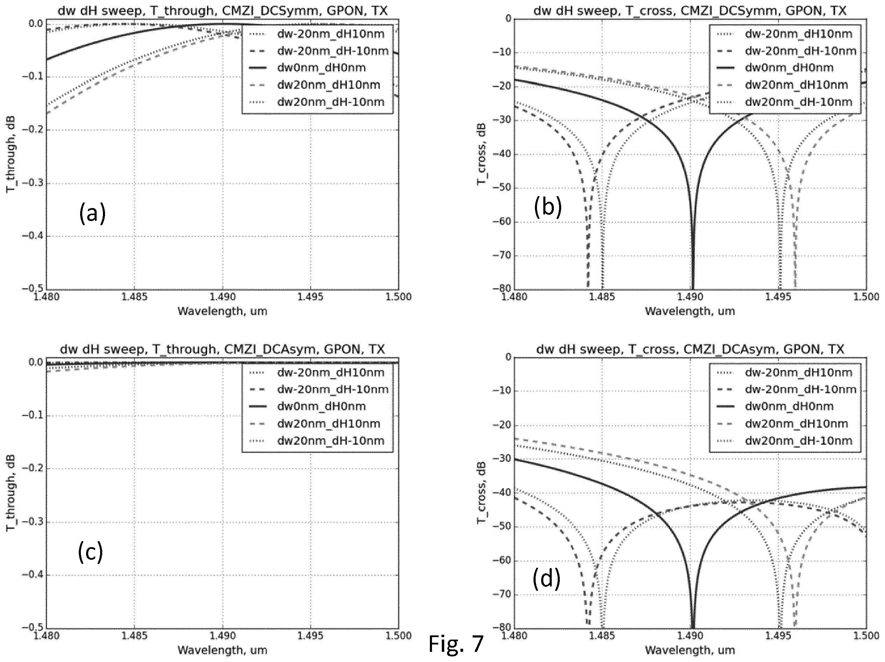

Fig. 7 shows simulated CROSS/THROUGH port transmission spectra of a PSMZI device using SCs and of a PSMZI device 100 using ACs 105 at the GPON TX wavelength band. Specifically, Fig. 7 (a) relates to the THROUGH port (TX insertion loss) with SCs. Fig. 7 (b) relates to the CROSS port (TX to RX cross talk) with SCs. Fig. 7 (c) relates to the THROUGH port 302 (TX insertion loss) with ACs 105. Fig. 7 (d) relates to the CROSS port 303 (TX to RX cross talk) with ACs 105.

Fig. 7 shows again fabrication tolerances in respect to waveguide width (dw) and height (dH). The solid curves correspond to the target design. The dotted lines correspond to couplers with a waveguide width error of dw = -20nm and a waveguide height error of dH = 10nm, and respectively with dw = 20nm and dH = -10nm. The dashed lines correspond to couplers with dw = -20nm and dH = -10nm, and respectively with dw = 20nm and dH = 10nm.

The comparison between Fig. 7 (a) and (c) shows that a PSMZI device 100 using ACs 105 can be designed to have lower insertion loss with a better fabrication tolerance at the TX band compared to a PSMZI device with SCs. The comparison between Fig. 7 (b) and (d) shows that a PSMZI device 100 using ACs 105 can be designed to have a lower cross-talk at the TX band compared to a PSMZI device using SCs.

The technique to shape the coupling coefficient $K$ of an AC 105 is specifically as follows. Firstly, on a standard platform, the structural parameters (e.g. coupler waveguide width, waveguide length, gap width) of a SC, with a coupling coefficient $K$ being reasonably close to the optimal value, are obtained. Secondly, using this SC design as a starting point, the three crucial structural parameters (i.e. coupler waveguide width w, waveguide width difference $\delta w$, gap width $\delta x$, as show in Fig. 5) of an AC 105, such as for example an LSST type AC, are obtained. This may advantageously be done by parametrical optimization, and in order to bring $K$ as close as possible to the optimal value (i.e. the optimal coupling coefficient).

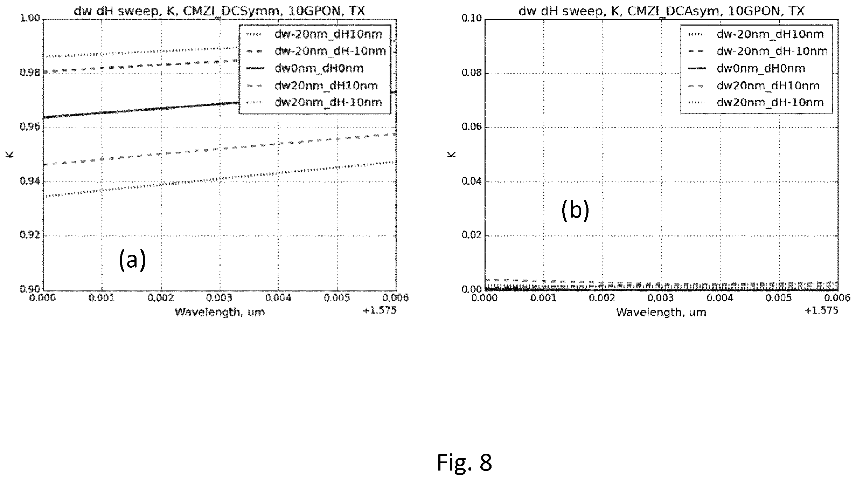

The present invention can also be applied to 10GPON applications. In this respect, Fig. 8 shows simulated coupling coefficients K over the TX wavelength band of (a) a single SC, and (b) a single AC 105 as used in a PSMZI device 100 for a 10GPON duplexer application.

Fig. 8 also shows fabrication tolerances in respect to waveguide width (dw) and height (dH). The solid curves are the target design. The dotted lines correspond to a coupler with a waveguide width error of dw = -20nm and a waveguide height error of dH = 10nm, and respectively with dw = 20nm and dH = -10nm. The dashed lines correspond to dw = -20nm and dH = -10nm, and respectively to dw = 20nm and dH = 10nm.

Ideally, $K$ should be equal to 0 or 1 at a wavelength of 1.578 $\mu$m (i.e. the 10GPON TX band central wavelength). The comparison between Fig. 12 (a) and (b) shows that the ACs 105 can be designed to have a coupling coefficient K with a value closer to the ideal design than the SCs, while at the same time having a lower sensitivity to the waveguide dimension errors (dw, dH) at the TX band.

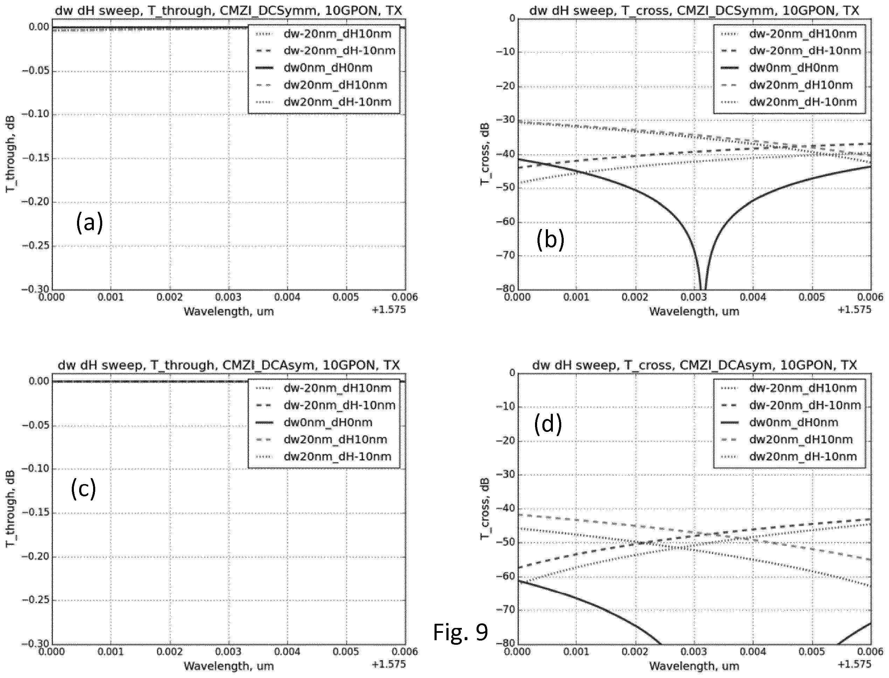

Fig. 9 shows simulated CROSS/THROUGH port transmission spectra of a PSMZI device using SCs and of a PSMZI device 100 using ACs 105 at the 10GPON TX wavelength band. Fig. 9 (a) relates to the THROUGH port (TX insertion loss) with SCs. Fig. 9 (b) relates to the CROSS port (TX to RX cross talk) with SCs. Fig. 9 (c) relates to the THROUGH port 302 (TX insertion loss) with ACs 105. Fig. 9 (d) relates to the CROSS port 303 (TX to RX cross talk) with ACs 105.

Fig. 9 also shows the fabrication tolerances in respect to waveguide width (dw) and height (dH). The solid curves correspond to the target design. The dotted lines correspond to couplers with a waveguide width error of dw = -20nm and a waveguide height error of dH = 10nm, and respectively with dw = 20nm and dH = -10nm. The dashed lines correspond to dw = -20nm and dH = -lOnm, and respectively to dw = 20nm and dH = 10nm.

The comparison between Fig. 9 (a) and (c) shows that a PSMZI device 100 using ACs 105 can be designed to have a lower insertion loss, and a better fabrication tolerance, at the TX band compared to a PMSZI device using SCs. The comparison between Fig. 9 (b) and (d) shows that a PSMZI device 100 using ACs 105 can be designed to have lower cross-talk at the TX band compared to a PSMZI device using SCs.

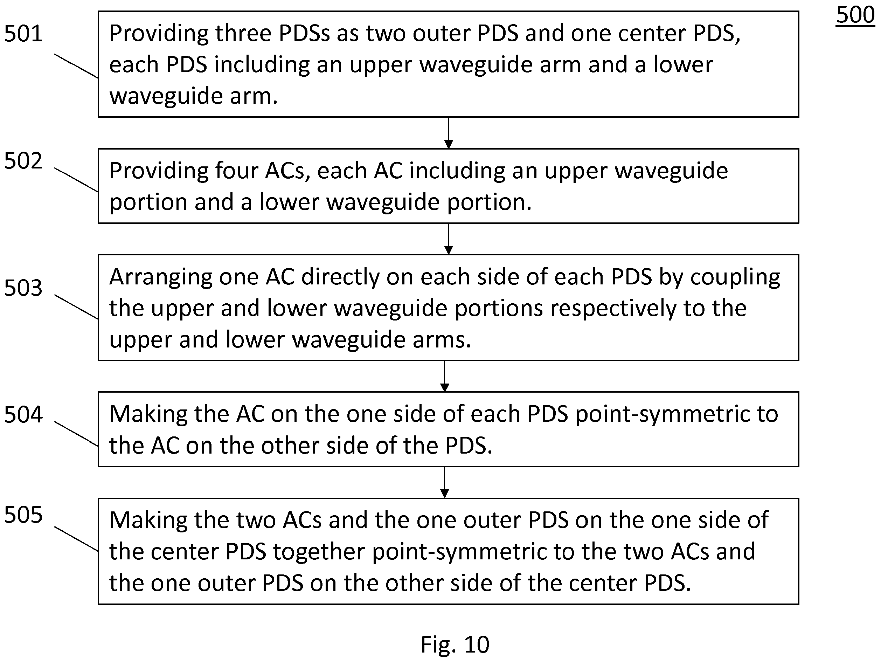

Fig. 10 shows a method 500 of fabricating a PSMZI device 100 described above. In particular, in a step 501, the three consecutive PDSs 101, 102 are provided as the two outer PDS 102 and the one center PDS 101. Each PDS 101, 102 includes an upper waveguide arm 103 and a lower waveguide arm 104. In a further step 502, the four ACs 105 are provided, each AC 105 including an upper waveguide portion 106 and a lower waveguide portion 107.

In particular, the steps 501 and 502 include a step 503, in which one AC 105 is arranged directly on each side of each PDS 101, 102, the upper and lower waveguide portions 106, 107 being respectively coupled to the upper and lower waveguide arms 103, 104. Thereby, a step 504 ensures that the AC 105 on the one side of each PDS 101, 102 is point-symmetric to the AC 105 on the other side of the PDS. Another step 505 ensures that the two ACs 105 and the one outer PDS 102 arranged on the one side of the center PDS 101 are together point-symmetric to the two ACs 105 and the one outer PDS 102 arranged on the other side of the center PDS 101.

In the method 500, the ACs 105 and PDS 101, 102 can be fabricated before arranging them all in the point-symmetric and consecutive order, or can be designed one after another in the consecutive order, or can be arranged in the consecutive order and finally shaped to become point symmetric.

In summary, a PSMZI device 100 according to an embodiment of the present invention, i.e. particularly the use of ACs 105 in this PSMZI device 100, results in much lower insertion loss in a TX (transmitter) wavelength band, and in much lower TX to RX (receiver) cross-talk in a TX wavelength band. This also means that the PSMZI device 100 can be fabricated without an antireflection coating (ARC) step. As a consequence, production costs are saved and the process flow is simplified. Additionally, the PSMZI device 100 is much less sensitive to fabrication errors, and offers a larger flexibility in its design.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Point-Symmetric Mach-Zehnder-Interferometer, PSMZI, device (100), comprising:

   three consecutive path delay sections, PDSs, provided as two outer PDS (102) and one center PDS (101), wherein each PDS (101, 102) includes an upper waveguide arm (103) and a lower waveguide arm (104) and the center PDS (101) provides a path difference of zero,
   four asymmetric couplers, ACs, each AC (105) including an upper waveguide portion (106) and a lower waveguide portion (107),
   wherein one AC (105) is arranged directly on each side of each PDS (101, 102), the upper and lower waveguide portions (106, 107) being respectively coupled to the upper and lower waveguide arms (103, 104),
   wherein the AC (105) on the one side of the PDS (101, 102) is point-symmetric to the AC (105) on the other side of the PDS (101, 102),
   wherein the two ACs (105) and the one outer PDS (102) arranged on the one side of the center PDS (101) are together point-symmetric to the two ACs (105) and the one outer PDS (102) arranged on the other side of the center PDS (101),
   wherein a width of each of the upper and lower waveguide portions (106, 107) of each AC (105) is between 1 - 3 $\mu$m,
   wherein a width variation of each of the upper and lower waveguide portions (106, 107) of each AC (105) is between 10 - 1000 nm, and
   wherein a distance between the upper waveguide portion and the lower waveguide portion (106, 107) of each AC is between 0.25 - 0.5 $\mu$m.

2. PSMZI device (100) according to claim 1, wherein a path difference provided by one outer PDS (102) is the same, but is provided in the other waveguide arm (103, 104), than a path difference provided by the other outer PDS (102).

3. PSMZI device (100) according to one of claims 1 or 2, wherein
a total path length of all upper waveguide arms (103) is the same as a total path length of all lower waveguide arms (104).

4. PSMZI device (100) according to one of claims 1 to 3, wherein
the four ACs (105) and the two outer PDS (102) are designed such that a phase difference, which is caused by the two ACs (105) and one outer PDS (102) arranged on the one side of the center PDS (101), is compensated by a phase difference, which is caused by the two ACs (105) and one outer PDS (102) arranged on the other side of the center PDS (101).

5. PSMZI device (100) according to one of claims 1 to 4, wherein
the waveguide arms (103, 104) are made of a material having a refractive index in a range of 1.4 - 4.5.

6. PSMZI device (100) according to one of claims 1 to 5, wherein
the waveguide arms (103, 104) are made of SiN, and are more particularly embedded into a cladding made of $SiO_2$.

7. PSMZI device (100) according to one of claims 1 to 6 further comprising:

an even number of additional PDS provided on either side of and point-symmetrically to the center PDS (101), each additional PDS including an upper waveguide arm and a lower waveguide arm, and
an even number of additional ACs or symmetric couplers, SCs, each additional AC or SC including an upper waveguide portion and a lower waveguide portion,
wherein one AC or SC is arranged directly on each side of each additional PDS, the upper and lower waveguide portions being respectively coupled to the upper and lower waveguide arms, and
wherein the AC or SC on the one side of the additional PDS is point-symmetric to the AC or SC on the other side of the additional PDS.

8. PSMZI device (100) according to one of claims 1 to 7, wherein

a width of each of the upper and lower waveguide portions (106, 107) of each AC (105) is between 1.5 - 2 $\mu$m,
a width variation of each of the upper and lower waveguide portions (106, 107) of each AC (105) is between 20 - 200 nm, and

a distance between the upper waveguide portion and the lower waveguide portion (106, 107) of each AC is between 0.3 - 0.4 $\mu$m.

9. PSMZI device (100) according to one of claims 1 to 8, wherein

the PSMZI device (100) includes two coupler Mach Zehnder Interferometers, MZIs, arranged in a point-symmetric way, and
coupling coefficients C($\lambda$) of each coupler MZI (301) satisfy C = 0.5 at a peak transmission wavelength of a cross-port (401) of the coupler MZI (301), C = 0 or C = 1 at a peak transmission wavelength of a through-port (402) of the coupler MZI (301), and dC/d$\lambda$ = 0 at the peak transmission wavelength of the cross-port (401).

10. PSMZI device (100) according to one of claims 1 to 9, wherein the four ACs (105) are of the line-symmetric series-tapered, LSST, type.

11. Wavelength duplexer device comprising at least one PSMZI device (100) according to one of claims 1 to 10, wherein the wavelength duplexer device is more particularly configured for use in a passive optical network, PON, related application.

12. Method (500) of fabricating a Point-Symmetric Mach-Zehnder Interferometer, PSMZI, device (100), comprising the steps of:

providing (501) three consecutive path delay sections, PDSs, as two outer PDS (102) and one center PDS (101), wherein each PDS (101, 102) includes an upper waveguide arm (103) and a lower waveguide arm (104) and the center PDS (101) provides a path difference of zero,
providing (502) four asymmetric couplers, ACs, each AC (105) including an upper waveguide portion (106) and a lower waveguide portion (107),
wherein one AC (105) is arranged (503) directly on each side of each PDS (101, 102), the upper and lower waveguide portions (106, 107) being respectively coupled to the upper and lower waveguide arms (103, 104),
wherein the AC (105) on the one side of the PDS (101, 102) is (504) point-symmetric to the AC (105) on the other side of the PDS (101, 102),
wherein the two ACs (105) and the one outer PDS (102) arranged on the one side of the center PDS (101) are (505) together point-symmetric to the two ACs (105) and the one outer PDS (102) arranged on the other side of the center PDS (101), wherein a width of each of the upper and lower waveguide portions (106, 107) of each AC (105) is between 1 - 3 $\mu$m,

wherein a width variation of each of the upper and lower waveguide portions (106, 107) of each AC (105) is between 10 - 1000 nm, and

wherein a distance between the upper waveguide portion and the lower waveguide portion (106, 107) of each AC is between 0.25 - 0.5 μm.

**Patentansprüche**

1. Punktsymmetrische Mach-Zehnder-Interferometer-, PSMZI-, Vorrichtung (100), umfassend:

drei aufeinanderfolgende Wegverzögerungsabschnitte, PDSs, die als zwei äußere PDS (102) und ein mittiger PDS (101) bereitgestellt sind, wobei jeder PDS (101, 102) einen oberen Wellenleiterarm (103) und einen unteren Wellenleiterarm (104) umfasst und der mittige PDS (101) eine Wegdifferenz von null bereitstellt, vier asymmetrische Koppler, ACs, wobei jeder AC (105) einen oberen Wellenleiterteil (106) und einen unteren Wellenleiterteil (107) umfasst, wobei ein AC (105) direkt auf jeder Seite jedes PDS (101, 102) angeordnet ist, wobei der obere und untere Wellenleiterteil (106, 107) mit dem oberen bzw. unteren Wellenleiterarm (103, 104) gekoppelt sind,

wobei der AC (105) auf der einen Seite des PDS (101, 102) punktsymmetrisch zu dem AC (105) auf der anderen Seite des PDS (101, 102) ist, wobei die zwei ACs (105) und der eine äußere PDS (102), der auf der einen Seite des mittigen PDS (101) angeordnet ist, zusammen punktsymmetrisch zu den zwei ACs (105) und dem einen äußeren PDS (102), der auf der anderen Seite des mittigen PDS (101) angeordnet ist, sind,

wobei eine Breite jedes des oberen und unteren Wellenleiterteils (106, 107) jedes AC (105) zwischen 1 - 3 μm beträgt, wobei eine Breitenschwankung jedes des oberen und unteren Wellenleiterteils (106, 107) jedes AC (105) zwischen 10 - 1000 nm beträgt, und

wobei ein Abstand zwischen dem oberen Wellenleiterteil und dem unteren Wellenleiterteil (106, 107) jedes AC zwischen 0,25 - 0,5 μm beträgt.

2. PSMZI-Vorrichtung (100) nach Anspruch 1, wobei eine durch einen äußeren PDS (102) bereitgestellte Wegdifferenz dieselbe wie eine durch den anderen äußeren PDS (102) bereitgestellte Wegdifferenz ist, jedoch in dem anderen Wellenleiterarm (103, 104) bereitgestellt ist.

3. PSMZI-Vorrichtung (100) nach einem der Ansprüche 1 oder 2, wobei eine Gesamtweglänge aller oberen Wellenleiterarme (103) dieselbe wie eine Gesamtweglänge aller unteren Wellenleiterarme (104) ist.

4. PSMZI-Vorrichtung (100) nach einem der Ansprüche 1 bis 3, wobei die vier ACs (105) und die zwei äußeren PDS (102) derart ausgestaltet sind, dass eine Phasendifferenz, die durch die zwei ACs (105) und einen auf der einen Seite des mittigen PDS (101) angeordneten äußeren PDS (102) verursacht wird, durch eine Phasendifferenz kompensiert wird, die durch die zwei ACs (105) und einen auf der anderen Seite des mittigen PDS (101) angeordneten äußeren PDS (102) verursacht wird.

5. PSMZI-Vorrichtung (100) nach einem der Ansprüche 1 bis 4, wobei die Wellenleiterarme (103, 104) aus einem Material bestehen, das einen Brechungsindex in einem Bereich von 1,4 - 4,5 aufweist.

6. PSMZI-Vorrichtung (100) nach einem der Ansprüche 1 bis 5, wobei die Wellenleiterarme (103, 104) aus SiN bestehen und insbesondere in eine Umhüllung aus $SiO_2$ eingebettet sind.

7. PSMZI-Vorrichtung (100) nach einem der Ansprüche 1 bis 6, ferner umfassend:

eine gerade Anzahl von zusätzlichen PDS, die auf jeder Seite von und punktsymmetrisch zu dem mittigen PDS (101) bereitgestellt sind, wobei jeder zusätzliche PDS einen oberen Wellenleiterarm und einen unteren Wellenleiterarm umfasst, und

eine gerade Anzahl von zusätzlichen ACs oder symmetrischen Kopplern, SCs, wobei jeder zusätzliche AC oder SC einen oberen Wellenleiterteil und einen unteren Wellenleiterteil umfasst,

wobei ein AC oder SC direkt auf jeder Seite jedes zusätzlichen PDS angeordnet ist, wobei der obere und untere Wellenleiterteil mit dem oberen bzw. unteren Wellenleiterarm gekoppelt sind, und

wobei der AC oder SC auf der einen Seite des zusätzlichen PDS punktsymmetrisch zu dem AC oder SC auf der anderen Seite des zusätzlichen PDS ist.

8. PSMZI-Vorrichtung (100) nach einem der Ansprüche 1 bis 7, wobei

eine Breite jedes des oberen und unteren Wellenleiterteils (106, 107) jedes AC (105) zwischen 1,5 - 2 $\mu$m beträgt, eine Breitenschwankung jedes des oberen und unteren Wellenleiterteils (106, 107) jedes AC (105) zwischen 20 - 200 nm beträgt, und ein Abstand zwischen dem oberen Wellenleiterteil und dem unteren Wellenleiterteil (106, 107) jedes AC zwischen 0,3 - 0,4 $\mu$m beträgt.

9. PSMZI-Vorrichtung (100) nach einem der Ansprüche 1 bis 8, wobei

    die PSMZI-Vorrichtung (100) zwei Koppler-Mach-Zehnder-Interferometer, MZIs, umfasst, die in einer punktsymmetrischen Weise angeordnet sind, und Kopplungskoeffizienten C($\lambda$) jedes Koppler-MZI (301) bei einer Spitzenübertragungswellenlänge eines Kreuzanschlusses (401) des Koppler-MZI (301) C = 0,5 erfüllen, bei einer Spitzenübertragungswellenlänge eines Durchgangsanschlusses (402) des Koppler-MZI (301) C = 0 oder C = 1 erfüllen und bei einer Spitzenübertragungswellenlänge des Kreuzanschlusses (401) dC/d$\lambda$ erfüllen.

10. PSMZI-Vorrichtung (100) nach einem der Ansprüche 1 bis 9, wobei die vier ACs (105) vom liniensymmetrischen, seriell verjüngten, LSST-, Typ sind.

11. Wellenlängenduplexervorrichtung, umfassend mindestens eine PSMZI-Vorrichtung (100) nach einem der Ansprüche 1 bis 10, wobei die Wellenlängenduplexervorrichtung insbesondere zur Verwendung in einer mit einem passiven optischen Netzwerk, PON, zusammenhängenden Anwendung konfiguriert ist.

12. Verfahren (500) zum Herstellen einer punktsymmetrischen Mach-Zehnder-Interferometer-, PSMZI-, Vorrichtung (100), umfassend die folgenden Schritte:

    Bereitstellen (501) von drei aufeinanderfolgenden Wegverzögerungsabschnitten, PDSs, als zwei äußere PDS (102) und einen mittigen PDS (101), wobei jeder PDS (101, 102) einen oberen Wellenleiterarm (103) und einen unteren Wellenleiterarm (104) umfasst und der mittige PDS (101) eine Wegdifferenz von null bereitstellt, Bereitstellen (502) von vier asymmetrischen Kopplern, ACs, wobei jeder AC (105) einen oberen Wellenleiterteil (106) und einen unteren Wellenleiterteil (107) umfasst, wobei ein AC (105) direkt auf jeder Seite jedes PDS (101, 102) angeordnet (503) wird, wobei der obere und untere Wellenleiterteil (106, 107) mit dem oberen bzw. unteren Wellenleiterarm (103, 104) gekoppelt werden,

wobei der AC (105) auf der einen Seite des PDS (101, 102) punktsymmetrisch zu dem AC (105) auf der anderen Seite des PDS (101, 102) ist (504), wobei die zwei ACs (105) und der eine äußere PDS (102), der auf der einen Seite des mittigen PDS (101) angeordnet ist, zusammen punktsymmetrisch zu den zwei ACs (105) und dem einen äußeren PDS (102), der auf der anderen Seite des mittigen PDS (101) angeordnet ist, sind (505), wobei eine Breite jedes des oberen und unteren Wellenleiterteils (106, 107) jedes AC (105) zwischen 1 - 3 $\mu$m beträgt, wobei eine Breitenschwankung jedes des oberen und unteren Wellenleiterteils (106, 107) jedes AC (105) zwischen 10 - 1000 nm beträgt, und wobei ein Abstand zwischen dem oberen Wellenleiterteil und dem unteren Wellenleiterteil (106, 107) jedes AC zwischen 0,25 - 0,5 $\mu$m beträgt.

**Revendications**

1. Dispositif interféromètre Mach-Zehnder à symétrie ponctuelle, PSMZI, (100), comprenant :

    trois sections de retard entre voies, PDS, consécutives prévues sous la forme de deux PDS extérieures (102) et d'une PDS centrale (101), dans lequel chaque PDS (101, 102) inclut un bras supérieur de guide d'ondes (103) et un bras inférieur de guide d'ondes (104) et la PDS centrale (101) fournit une différence entre voies de zéro, quatre coupleurs asymétriques, AC, chaque AC (105) incluant une partie supérieure de guide d'ondes (106) et une partie inférieure de guide d'ondes (107), dans lequel un AC (105) est agencé directement sur chaque côté de chaque PDS (101, 102), les parties supérieure et inférieure de guide d'ondes (106, 107) étant respectivement couplées aux bras supérieur et inférieur de guide d'ondes (103, 104), dans lequel l'AC (105) sur un côté de la PDS (101, 102) est à symétrie ponctuelle par rapport à l'AC (105) sur l'autre côté de la PDS (101, 102), dans lequel les deux AC (105) et une PDS extérieure (102) agencée sur un côté de la PDS centrale (101) sont ensemble à symétrie ponctuelle par rapport aux deux AC (105) et à une PDS extérieure (102) agencée sur l'autre côté de la PDS centrale (101), dans lequel une largeur de chacune des parties supérieure et inférieure de guide d'ondes (106, 107) de chaque AC (105) est entre 1 - 3 $\mu$m,

dans lequel une variation de largeur de chacune des parties supérieure et inférieure de guide d'ondes (106, 107) de chaque AC (105) est entre 10 - 1000 nm, et

dans lequel une distance entre la partie supérieure de guide d'ondes et la partie inférieure de guide d'ondes (106, 107) de chaque AC est entre 0,25 - 0,5 $\mu$m.

2. Dispositif PSMZI (100) selon la revendication 1, dans lequel

une différence entre voies fournie par une PDS extérieure (102) est la même, mais est prévue dans l'autre bras de guide d'ondes (103, 104), qu'une différence entre voies fournie par l'autre PDS extérieure (102).

3. Dispositif PSMZI (100) selon l'une des revendications 1 ou 2, dans lequel

une longueur de voies totale de tous les bras supérieurs de guide d'ondes (103) est la même qu'une longueur de voies totale de tous les bras inférieurs de guide d'ondes (104).

4. Dispositif PSMZI (100) selon l'une des revendications 1 à 3, dans lequel

les quatre AC (105) et les deux PDS extérieures (102) sont conçus de telle sorte qu'une différence de phase, qui est causée par les deux AC (105) et une PDS extérieure (102) agencée sur un côté de la PDS centrale (101), soit compensée par une différence de phase, qui est causée par les deux AC (105) et une PDS extérieure (102) agencée sur l'autre côté de la PDS centrale (101).

5. Dispositif PSMZI (100) selon l'une des revendications 1 à 4, dans lequel

les bras de guide d'ondes (103, 104) sont faits d'un matériau ayant un indice de réfraction dans une plage de 1,4 - 4,5.

6. Dispositif PSMZI (100) selon l'une des revendications 1 à 5, dans lequel

les bras de guide d'ondes (103, 104) sont faits de SiN, et sont plus particulièrement incorporés dans un gainage fait de SiO$_2$.

7. Dispositif PSMZI (100) selon l'une des revendications 1 à 6 comprenant en outre :

un nombre pair de PDS supplémentaires prévues de chaque côté de et de façon symétriquement ponctuelle par rapport à la PDS centrale (101), chaque PDS supplémentaire incluant un bras supérieur de guide d'ondes et un bras inférieur de guide d'ondes, et

un nombre pair d'AC ou de coupleurs symétriques, SC, supplémentaires, chaque AC ou SC supplémentaire incluant une partie supérieure de guide d'ondes et une partie inférieure de guide d'ondes,

dans lequel un AC ou SC est agencé directement sur chaque côté de chaque PDS supplémentaire, les parties supérieure et inférieure de guide d'ondes étant respectivement couplées aux bras supérieur et inférieur de guide d'ondes, et

dans lequel l'AC ou le SC sur un côté de la PDS supplémentaire est à symétrie ponctuelle par rapport à l'AC ou au SC sur l'autre côté de la PDS supplémentaire.

8. Dispositif PSMZI (100) selon l'une des revendications 1 à 7, dans lequel

une largeur de chacune des parties supérieure et inférieure de guide d'ondes (106, 107) de chaque AC (105) est entre 1,5 - 2 $\mu$m,

une variation de largeur de chacune des parties supérieure et inférieure de guide d'ondes (106, 107) de chaque AC (105) est entre 20- 200 nm, et

une distance entre la partie supérieure de guide d'ondes et la partie inférieure de guide d'ondes (106, 107) de chaque AC est entre 0,3- 0,4 $\mu$m.

9. Dispositif PSMZI (100) selon l'une des revendications 1 à 8, dans lequel

le dispositif PSMZI (100) inclut deux interféromètres Mach-Zehnder, MZI, coupleurs agencés de manière à symétrie ponctuelle, et

des coefficients de couplage C($\lambda$) de chaque MZI coupleur (301) satisfont à C = 0,5 à une longueur d'onde de transmission de pointe d'un port croisé (401) du MZI coupleur (301), C = 0 ou C = 1 à une longueur d'onde de transmission de pointe d'un port direct (402) du MZI coupleur (301), et dC/d$\lambda$ = 0 à la longueur d'onde de transmission de pointe du port croisé (401).

10. Dispositif PSMZI (100) selon l'une des revendications 1 à 9, dans lequel les quatre AC (105) sont du type ligne-symétrique série-tapée, LSST (« line symmetric séries tapered »).

11. Dispositif duplexeur à longueur d'onde comprenant au moins un dispositif PSMZI (100) selon l'une des revendications 1 à 10, dans lequel le dispositif duplexeur à longueur d'onde est plus particulièrement configuré pour l'utilisation dans une application connexe à réseau optique passif, PON.

12. Procédé (500) de fabrication d'un dispositif interféromètre Mach-Zehnder à symétrie ponctuelle, PSMZI, (100), comprenant les étapes de :

fourniture (501) de trois sections de retard entre voies, PDS, consécutives sous forme de deux PDS extérieures (102) et d'une PDS centrale (101), dans lequel chaque PDS (101, 102) inclut un bras supérieur de guide d'ondes (103) et un bras inférieur de guide d'ondes (104) et la PDS centrale (101) fournit une différence entre voies de zéro, fourniture (502) de quatre coupleurs asymétriques, AC, chaque AC (105) incluant une partie supérieure de guide d'ondes (106) et une partie inférieure de guide d'ondes (107),

dans lequel un AC (105) est agencé (503) directement sur chaque côté de chaque PDS (101, 102), les parties supérieure et inférieure de guide d'ondes (106, 107) étant respectivement couplées aux bras supérieur et inférieur de guide d'ondes (103, 104),

dans lequel l'AC (105) sur un côté de la PDS (101, 102) est (504) à symétrie ponctuelle par rapport à l'AC (105) sur l'autre côté de la PDS (101, 102),

dans lequel les deux AC (105) et une PDS extérieure (102) agencée sur un côté de la PDS centrale (101) sont (505) ensemble à symétrie ponctuelle par rapport aux deux AC (105) et à une PDS extérieure (102) agencée sur l'autre côté de la PDS centrale (101), dans lequel une largeur de chacune des parties supérieure et inférieure de guide d'ondes (106, 107) de chaque AC (105) est entre 1 - 3 $\mu$m,

dans lequel une variation de largeur de chacune des parties supérieure et inférieure de guide d'ondes (106, 107) de chaque AC (105) est entre 10 - 1000 nm, et

dans lequel une distance entre la partie supérieure de guide d'ondes et la partie inférieure de guide d'ondes (106, 107) de chaque AC est entre 0,25 - 0,5 $\mu$m.

Fig. 1

EP 3 223 049 B1

Fig. 2

Fig. 3

EP 3 223 049 B1

Fig. 4

EP 3 223 049 B1

Fig. 5

Fig. 6

Fig. 7

Fig. 8

Fig. 9

| 501 | Providing three PDSs as two outer PDS and one center PDS, each PDS including an upper waveguide arm and a lower waveguide arm. |

| 502 | Providing four ACs, each AC including an upper waveguide portion and a lower waveguide portion. |

| 503 | Arranging one AC directly on each side of each PDS by coupling the upper and lower waveguide portions respectively to the upper and lower waveguide arms. |

| 504 | Making the AC on the one side of each PDS point-symmetric to the AC on the other side of the PDS. |

| 505 | Making the two ACs and the one outer PDS on the one side of the center PDS together point-symmetric to the two ACs and the one outer PDS on the other side of the center PDS. |

Fig. 10

EP 3 223 049 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011097035 A1

- US 5165001 A

### Non-patent literature cited in the description

- **HIDA et al.** *Journal of Lightwave Technology,* 1996, vol. 14 (10), 2301-2310
- *Electronics and Communications in Japan,* 1998, vol. 81 (4), 19-28

- **TAKAGI et al.** *Journal of Lightwave Technology,* 1992, vol. 10 (12), 1814-1824